Europäisches Patentamt

European Patent Office

Office européen des brevets

(11) Veröffentlichungsnummer: **0 418 881 A1**

# EUROPÄISCHE PATENTANMELDUNG

(21) Anmeldenummer: 90118094.3

(22) Anmeldetag: 20.09.90

(51) Int. Cl.5: **F04B 21/04, F16J 9/16**

(30) Priorität: 21.09.89 DE 3931487

(43) Veröffentlichungstag der Anmeldung:
27.03.91 Patentblatt 91/13

(84) Benannte Vertragsstaaten:
**DE FR IT SE**

(71) Anmelder: Xaver Fendt & Co.
Johann-Georg-Fendt-Strasse 4

W-8952 Marktoberdorf(DE)

(72) Erfinder: **Marschall, Hans**

verstorben(DE)
Erfinder: **Heindl, Richard**
**Elsenweg 26**
**W-8952 Marktoberdorf(DE)**

(54) Abdichtung für Kolben in Axialkolbenmaschinen.

(57) Abdichtungen für Kolben in hydraulischen Maschinen, die mehrere unter Bildung eines Ringspaltes aufgetrennte Kolbenringe umfassen, weisen bisher am Ringspalt eine verhältnismäßig hohe Leckage auf.

Zur Beseitigung dieser Leckage überlappen sich die Ringendbereiche (12,13) des Kolbenringes (7), so daß der Ringspalt (16) für Druckmittel unpassierbar ist.

*Fig. 3*

EP 0 418 881 A1

# ABDICHTUNG FÜR KOLBEN IN AXIALKOLBENMASCHINEN

Die Erfindung betrifft eine Abdichtung für Kolben in hydraulischen Maschinen, insbesondere Axialkolbenmaschinen, bestehend aus mehreren radial beweglich in einer Umfangsnut des Kolbens unmittelbar aufeinanderfolgend eingesetzten, aufgetrennten Kolbenringen, die durch den im Druckraum des den Kolben aufnehmenden Zylinders herrschenden Druck des Arbeitsdruckmittels radial gegen die Wand des Zylinders gepresst werden und an der Auftrennstelle einen Ringspalts ausbilden.

Eine Abdichtung mit dem beschriebenen Aufbau geht beispielsweise aus der DE-OS 33 19 729 Al hervor. Die dort verwendeten Kolbenringe in Lamellenbauweise sind durch einen geraden, radial verlaufenden Trennschnitt aufgetrennt.Der Außendurchmesser der Kolbenringe ist so bemessen, daß im Neuzustand ihre durch den Trennschnitt gebildeten Ringendbereiche ohne wesentlichen Spalt aneinander anliegen, wenn die Kolbenachse mit der Zylinderschse zusammenfällt. Während des Maschinenbetriebs führt jedoch der Kolben zyklisch eine Kippbewegung zur Zylinderachse aus, die Kippwinkel bis etwa 5° erreichen kann. Bereits dabei bildet sich an dem Trennschnitt ein Spalt aus, der eine potentielle Leckageöffnung für das Arbeitsdruckmittel darstellt. Darüberhinaus ist aufgrund von Verschleiß am Kolbenring mit einer weiteren Spaltbildung zu rechnen. Damit an dieser Stelle nicht wirklich übermäßig viel Druckmittel verloren geht, werden die Kolbenringe so eingebaut, daß ihre Trennschnitte gegeneinander versetzt sind und sich dadurch gegenseitig abdichten. Wenngleich die Leckage im Betrieb auf diese Weise erheblich herabgesetzt wird, besteht noch immer die Möglichkeit eines Druckmittelverlustes über den Spalt des Kolbenringes, der auf der dem Druckraum des Zylinders abgewandten Seite des Kolbenringsatzes angeordnet ist. Hier besteht für das Druckmittel, für das ja ein Zutritt in den Ringspalts zwischen dem Kolben und den Kolbenringen erwünscht ist und bewusst geschaffen wurde, um die Abdichtungswirkung der Kolbenringe zu verbessern, die Möglichkeit, durch den Spalt in das drucklose Maschinengehäuse abzufließen.

Hiervon ausgehend besteht die Aufgabe der Erfindung darin, die Leckage einer Abdichtung der Eingangs beschriebenen Art noch weiter zu verringern und insbesondere unabhängig von der sich je nach Kippstellung des Kolbens und Verschleiß der Kolbenringe einstellenden Größe des Spaltes zu machen.

Zur Lösung dieser Aufgabe wird vorgeschlagen, daß zumindest bei dem Kolbenring, der auf der dem Druckraum des Zylinders abgewandten Seite liegt, der Ringspalt durch eine in radialer Richtung spielfreie Überlappung der durch die Auftrennung entstandenen Ringendbereiche des Kolbenringes für den radialen Durchtritt von Druckmittel unpassierbar gemacht ist, indem der eine Ringendbereich mit einer sich über den möglichen Überlappungsbereich erstreckenden Ausnehmung für die Aufnahme des anderen Endbereiches versehen ist und im Überlappungsbereich eine in Umfangsrichtung verlaufende Auflagefläche für den anderen Ringendbereich aufweist.

Durch die Erfindung wird bereits durch den Einbau eines einzigen erfindungsgemäßen Kolbenringes die Leckage an dieser Stelle zuverlässig praktisch vollständig unterbunden. Gleichgültig, welche Größe der verbliebene Spalt während des Maschinenbetriebes annimmt, kann kein Druckmittel radial in ihn eintreten.

Da die beiden Ringendbereiche des Kolbenringes im Überlappungsbereich aneinander in Umfangsrichtung vorbeigleiten, kann es an dieser Stelle zu keiner Leckage kommen, zumal auch die beiden Ringendbereiche im Überlappungsbereich unter dem im Druckraum herrschenden Druck aneinandergepresst werden.

Weitere vorteilhafte Einzelheiten der Erfindung gehen aus den übrigen Patentansprüchen hervor.

Ein Ausführungsbeispiel der Erfindung wird im folgenden an Hand einer Zeichnung naher erläutert. Es zeigt:

Fig. 1 Eine Schnittansicht des Abdichtungsbereiches bei einer Axialkolbenmaschine

Fig. 2 eine Ansicht eines Kolbenringes der Abdichtung in nicht eingebauten Zustand und

Fig. 3 eine Ansicht eines Kolbenringes in eingebautem Zustand.

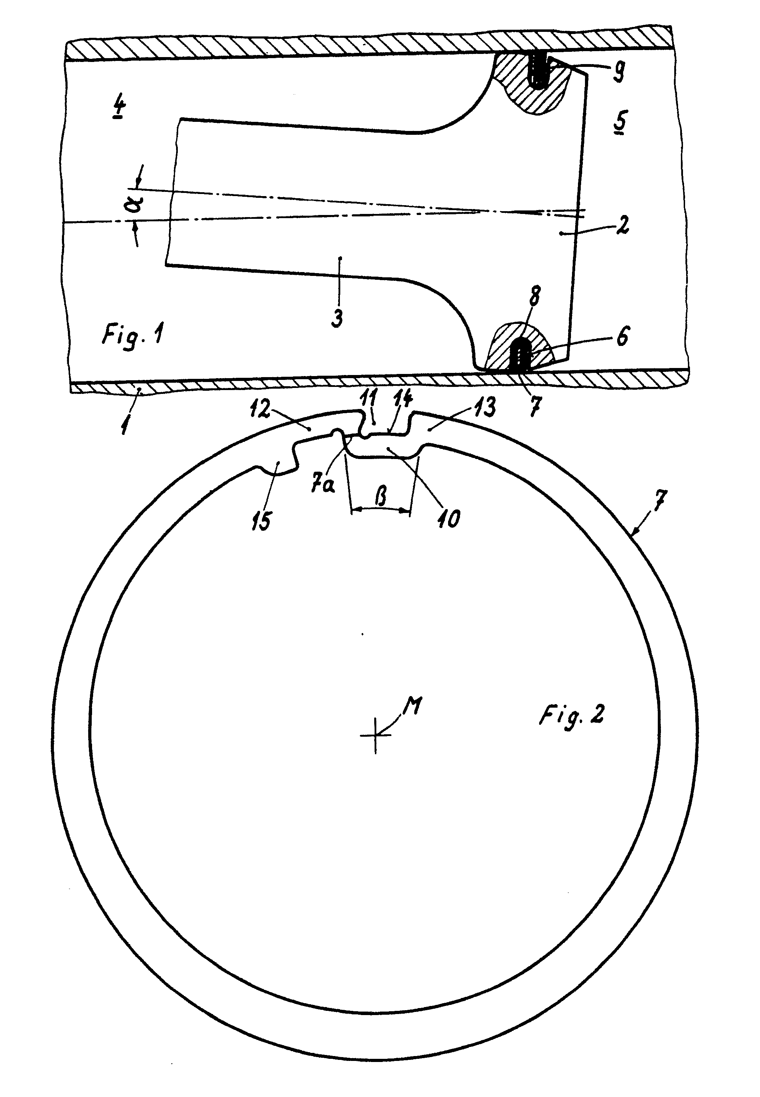

Zur Erläuterung der Erfindung ist in Fig. 1 ein Teilbereich eines Zylinders 1 einer Schrägachsenmaschine mit einem im Zylinder 1 längsverschiebbaren Kolben 2 gezeigt. Angetrieben ist der Kolben 2 über eine fest mit ihm verbundene Kolbenstange 3. Bei Maschinen dieser Art führt der Kolben 2 im Betrieb nicht nur die erwähnte Längsbewegung aus, sondern auch eine Kippbewegung, bei der die Achse des Kolbens 2 bzw. der Kolbenstange 3 mit der des Zylinders 1 einen Winkel α von bis zu 5° nach beiden Seiten einschließt. Um dennoch eine zentrische, klemmfreie Führung des Kolbens 2 zu erhalten, ist dessen Außenfläche in der kritischen hinteren Hälfte, die dem hinter dem Kolben 2 befindlichen, praktisch drucklosen Innenraum 4 der Kolbenmaschine zugewandt ist, kugelförmig ausgestaltet. Dagegen ist die vordere Hälfte der Außenfläche, die dem vor dem Kolben 2 liegenden Druckraum 5 zugewandt ist, kegelförmig.

Zur Abdichtung des Druckraumes 5 gegen den drucklosen Innenraum 4 sind in einer den kugelförmigen von dem kegelförmigen Kolbenbereich trennenden Umfangsnut 6 unmittelbar nebeneinander drei aufgetrennte Kolbenringe 7 mit gegeneinander versetzten Trennstellen eingesetzt. Die Breite der Umfangsnut 6 ist etwas größer als die Gesamtbreite aller Kolbenringe 7, so daß diese eine ungehinderte Bewegungsfreiheit in radialer Richtung besitzen. Eine ausreichend bemessene Nuttiefe garantiert die Ausbildung eines Ringraumes 8 unter den Kolbenringen 7, bei dessen Druckbeaufschlagung die Kolbenringe 7 radial nach außen gegen die Wand des Zylinders 1 gepresst werden. Die Druckbeaufschlagung des Ringraumes 8 erfolgt über einen Ringspalt 9, der freigegeben wird, wenn die Kolbenringe 7 unter dem während des Maschinenbetriebes im Druckraum 5 aufgebauten Druck spielfrei aneinander und an der dem Druckraum 5 abgewandten Wand der Umfangsnut 6 anliegen. Ein Druckaufbau im Druckraum 5 führt somit über den Druckaufbau im Ringraum 8 zu einer Verstärkung der radialen Anlagekraft der Kolbenringe 7 über die Anlagekraft hinaus, die sie bereits bei ihrer Montage durch eine Eigenverspannung erhalten.

Bezüglich des bisher beschriebenen Aufbaus stimmt die Abdichtung mit der bekannten Abdichtung überein. Damit im Gegensatz zu der bekannten Abdichtung insbesondere aus dem Ringraum 8 kein Druckmittel in den drucklosen Innenraum 4 entweichen kann, sind die Kolbenringe 7 im Bereich ihrer Trennstelle wie in Fig. 2 gezeigt ausgestaltet. Dabei ist zu beachten, daß diese Fig. einen Kolbenring 7 nicht in eingebautem Zustand, sondern im Zustand der Herstellung wiedergibt.

Der Kolbenring 7 ist im Außendurchmesser etwas größer gehalten als der Durchmesser des ihn aufnehmenden Zylinders 1 und bezüglich der radialen Ausdehnung seines Querschnittes im wesentlichen als Träger gleicher Biegefestigkeit ausgestaltet. Im Bereich der geringsten radialen Ausdehnung ist der Kolbenring 7 über einen Umfangswinkel $\beta$ von ca. 15° mit einer sich radial nach innen auf etwa die Breite des diametral gegenüberliegenden Ringquerschnittes erstreckenden Verbreiterung 10 und mit einer dazu mittigen, nach außen offenen Ausnehmung 11 versehen. Deren radiale Ausdehnung ist so groß, daß zumindest einer der an den nach innen gezogenen Bereich anschließenden Ringendbereiche 12,13 eine geringere Breite aufweist. Der Grund der Ausnehmung 11 bildet dabei einen Teil eines Kreises um den geometrischen Mittelpunkt M des Kolbenringes 7 und nach der Auftrennung des Kolbenringes 7 eine Auflagefläche 14 für den freien Ringendbereich 12. Die Ausdehnung der Ausnehmung 11 in Umfangsrichtung übertrifft etwas das Maß, um das der Kolbenring 7 bei der Montage zusammengedrückt werden soll, um in eingebauten Zustand eine gewünschte Eigenvorspannung zu erreichen. Die Auftrennung des Kolbenringes 7 erfolgt durch einen Trennschnitt 7a, der den Grund der Ausnehmung 11 nach einer der Seiten verlangert, an der sich der Ringendbereich 12 mit der bezogen auf die Aussparungstiefe geringeren radialen Breite anschließt.

Da der Ringendbereich 12 nicht hoch genug ist, um weit genug in die Umfangsnut 6 einzugreifen, besteht die Gefahr des Herausbrechens aus der Umfangsnut 6. Um dies zu vermeiden, ist der Ringendbereich 12 durch eine Nase 15 verstärkt, zwischen der und dem Ende der Verbreiterung 10 ein Abstand gelassen ist, der mindestens der Breite der Ausnehmung 11 entspricht. Die Nase 15 erstreckt sich ebensoweit nach innen wie die Verbreiterung 10, der im übrigen die gleiche Funktion für den Ringendbereich 13 zukommt.

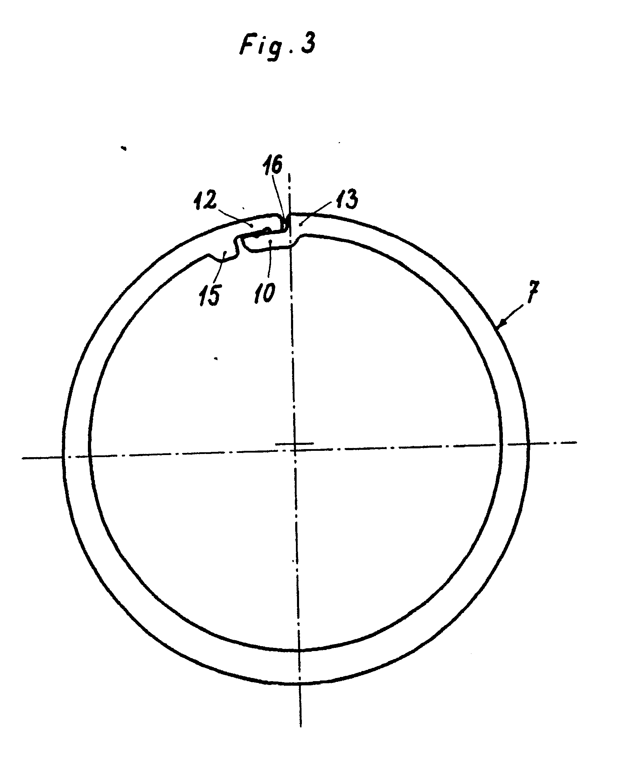

Bei der Montage werden die Kolbenringe 7 zunächst durch Aufbiegen in die Umfangsnut 6 eingesetzt. Zum Einbau des bestückten Kolbens 2 in den Zylinder 1 können die Kolbenringe 7 soweit zusammengedrückt werden, bis das Ende des Ringendbereiches 12 an dem Ringendbereich 13 anliegt und somit die Ausnehmung 11 vollständig von dem Ringendbereich 12 ausgefüllt ist. Diesen Zustand dürften unverschlissene Kolbenringe 7 immer dann annehmen, wenn die Achse des Kolbens 2 mit der des Zylinders 1 zusammenfällt. Mit zunehmendem Kolbenverschleiß und zunehmender Neigung des Kolbens 2 zur Achse des Zylinders 1 entfernt sich der Ringendbereich 12 auf der Auflagefläche 14 gleitend vom Ringendbereich 13, wobei sich, wie in Fig. 3 gezeigt, ein Ringspalt 16 ausbildet.

Infolge der erfindungsgemäßen Überlappung der beiden Ringendbereiche 12,13 ist dieser Ringspalt 16 ohne durchgehende Verbindung mit dem Ringraum 8, so daß auf diese Weise aus dem Druckraum 5 kein Druckmittel entweichen kann. Die Stelle, an der der Ringendbereich 12 auf dem Ringendbereich 13 aufliegt, kann in diesem Zusammenhang als druckdicht angesehen werden, da der Ringendbereich 13 mit seiner Verbreiterung 10 unter dem im Ringraum 8 herrschenden Druck fest gegen den Ringendbereich 12 gepresst wird.

## Ansprüche

1. Abdichtung für Kolben in hydraulischen Maschinen, insbesondere Axialkolbenmaschinen, bestehend aus mehreren radial beweglich in einer Umfangsnut (6) des Kolbens (2) unmittelbar aufeinanderfolgend eingesetzten, aufgetrennten Kolbenringen (7), die durch den im Druckraum (5) des den Kolben aufnehmenden Zylinders (1) herrschenden Druck des Arbeitsdruckmittels radial gegen die Wand des Zylinders gepresst werden und an der Auftrennstelle einen Ringspalt (16) ausbilden, **dadurch gekennzeichnet,** daß zumindest bei dem Kolbenring (7), der auf der dem Druckraum (5) des Zylinders (1) abgewandten Seite liegt, der Ringspalt (16) durch eine in radialer Richtung spielfreie Überlappung der durch die Auftrennung entstandenen Ringendbereiche (12,13) des Kolbenringes (7) für den radialen Durchtritt von Druckmittel unpassierbar gemacht ist, indem der eine Ringendbereich (13) mit einer sich über den möglichen Überlappungsbereich erstreckenden Ausnehmung (11) für die Aufnahme des anderen Endbereiches (12) versehen ist und im Überlappungsbereich eine in Umfangsrichtung verlaufende Auflagefläche (14) für den Ringendbereich (12) aufweist.

2. Abdichtung nach Anspruch 1, **dadurchgekennzeichnet,** daß der Kolbenring (7) durch einen Trennschnitt aufgetrennt ist.

3. Abdichtung nach Anspruch 1 oder 2, bei der die Kolbenringe (7) bezüglich ihres Querschnittes als Träger gleicher Biegefestigkeit ausgebildet sind, **dadurch gekennzeichnet,** daß der Ringendbereich (13) mit einer Verbreiterung (10) versehen ist, in der sich die Ausnehmung (11) befindet.

4. Abdichtung nach Anspruch 3, **dadurch gekennzeichnet,** daß der Ringendbereich (12) durch eine radial nach innen gerichtete Nase (15) verstärkt ist, die in Umfangsrichtung einen Abstand zur Verbreiterung (10) aufweist und deren radiale Erstreckung gleich ist der radialen Erstreckung des gegenüberliegenden Bereiches des Kolbenringes (7).

Fig. 1

Fig. 2

# Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 076 740   (COMPRESSEURS BERNARD)<br>* Seite 3, Zeile 27 - Seite 4, Zeile 40; Figuren 2-7 *<br>– – – | 1,2 | F 04 B 21/04<br>F 16 J 9/16 |
| Y,D | DE-A-3 319 729   (VOLVO FLYMOTOR)<br>* Seite 7, Absatz 2 - Seite 8, Absatz 1 * * Seite 9, Absatz 2;<br>Figur 1 *<br>– – – | 1,2 | |
| A | EP-A-0 214 321   (LEYBOLD-HERAEUS)<br>* Spalte 3, Zeile 36 - Spalte 4, Zeile 24; Figuren 1-3 *<br>– – – | 1,2 | |
| A | US-A-1 984 889   (MC CURDY)<br>* Seite 1, Zeile 40 - Seite 2, Zeile 15; Figuren 1, 2 *<br>– – – – – | 1-3 | |
| | | | **RECHERCHIERTE SACHGEBIETE (Int. Cl.5)**<br><br>F 04 B<br>F 16 J |

Der vorliegende Recherchenbericht wurde für alle Patentansprüche erstellt

| Recherchenort | Abschlußdatum der Recherche | Prüfer |
|---|---|---|
| Den Haag | 29 November 90 | BERTRAND G. |